# EUROPEAN PATENT APPLICATION

(11) **EP 4 383 813 A1**
(43) Date of publication of application: **12.06.2024**
(21) Application number: 22852070.6
(22) Date of filing: 29.07.2022
(51) Int. Cl.: H04W 36/00

(54) **RADIO COMMUNICATION METHOD, USER EQUIPMENT, ELECTRONIC DEVICE, AND STORAGE MEDIUM**

(30) Priority: 02.08.2021 CN 202110882488; 20.07.2022 CN 202210863392
(71) Applicant: Datang Mobile Communications Equipment Co., Ltd., Beijing 100085 (CN)
(72) Inventor: WANG, Ruiwei, Beijing 100085 (CN); ZHANG, Mingzhu, Beijing 100085 (CN)
(74) Representative: Studio Torta S.p.A.
(86) International application number: PCT/CN2022/109054
(87) International publication number: WO 2023/011357

(57) **Abstract**

The present disclosure provides a radio communication method, a UE, an electronic device and a storage medium. The radio communication method includes: determining that an LBT procedure is to be performed in accordance with a received target instruction, wherein the target instruction is used to indicate the UE to handover from a source cell to a first target cell in a spectrum-sharing network; and, when an LBT failure occurs in an access procedure to the first target cell, recording LBT failure information in at least one of a Radio Link Failure (RLF) report, a random access report, or a successful handover report in accordance with a handover result.

## Description

### CROSS-REFERENCE TO RELATED APPLICATION

This application claims priorities of the Chinese patent application No. 202110882488.5 filed on August 2, 2021 and the Chinese patent application No. 202210863392.9 filed on July 20, 2022, which are incorporated herein by reference in their entireties.

### TECHNICAL FIELD

The present disclosure relates to the field of radio communication technology, in particular to a radio communication method, a User Equipment (UE), an electronic device and a storage medium.

### BACKGROUND

Mobility Robustness Optimization (MRO) technology is used to prevent the occurrence of a Radio Link Failure (RLF) or handover failure in a handover procedure through analyzing an RLF report and optimizing a handover parameter configuration.

The 3^{rd}-Generation Partnership Project (3GPP) adds such a function as access spectrum-sharing network in R16, and adds a characteristic of performing MRO on the access spectrum-sharing network in R17. Due to a difference between a traditional network and the spectrum-sharing network, a Listen Before Talk (LBT) failure may occur especially for the spectrum-sharing network.

For the existing MRO technology, the parameter optimization is mainly performed on a non-spectrum-sharing network. In a scenario of the spectrum-sharing network, it is impossible to determine a cause for the RLF in accordance with contents in the RLF report, so a parameter optimization result is adversely affected, and even an error occurs for the parameter optimization.

### SUMMARY

An object of the present disclosure is to provide a radio communication method, a UE, an electronic device and a storage medium, so as to at least solve, or at least partially solve, the above-mentioned problems.

In one aspect, the present disclosure provides in some embodiments a radio communication method performed by a UE, including: determining that an LBT procedure is to be performed in accordance with a received target instruction; and when the target instruction is used to indicate the UE to handover from a source cell to a first target cell in a spectrum-sharing network and an LBT failure occurs in a random access procedure for a target cell, recording LBT failure information in at least one of an RLF report, a random access report or a Successful Handover Report (SHR) in accordance with a handover result.

In some possible embodiments of the present disclosure, the recording the LBT failure information in the RLF report in accordance with the handover result includes, when the handover result indicates a handover failure, recording first result information in the RLF report, and the first result information indicates that the handover failure is caused by continuous LBT failures on all Bandwidth Parts (BWPs).

In some possible embodiments of the present disclosure, the recording the LBT failure information in at least one of the RLF report, the random access report or the successful handover report in accordance with the handover result includes, when the handover result indicates a handover success, recording second result information in at least one of the RLF report, the random access report or the successful handover report, and the second result information is random access information indicating an LBT failure on at least one BWP before the handover success.

In some possible embodiments of the present disclosure, subsequent to recording the first result information in the RLF report, the radio communication method further includes: triggering Radio Resource Control (RRC) connection reestablishment to a second target cell in the spectrum-sharing network to perform the LBT procedure; and when continuous LBT failures occur on all the BWPs, recording third result information in the RLF report. The third result information indicates that an RRC connection reestablishment request fails to be transmitted when the continuous LBT failures occur on all the BWPs, and the second target cell is the source cell or the first target cell, or a cell other than the source cell and the first target cell.

In some possible embodiments of the present disclosure, the first result information is recorded in the RLF report in the form of first specified identification information.

In some possible embodiments of the present disclosure, the first result information further includes random access information indicating an LBT failure of the UE on all the BWPs.

In some possible embodiments of the present disclosure, the third result information further includes UE reestablishment cell identification information, the third result information is recorded in the RLF report in the form of second specified identification information, and the UE reestablishment cell identification information is set as a null value in the second specified identification information.

In some possible embodiments of the present disclosure, the third result information further includes UE reestablishment cell identification information, and the third result information is expressed through setting the UE reestablishment cell identification information as a null value in the second specified identification information.

In some possible embodiments of the present disclosure, the radio communication method further includes recording, in at least one of the RLF report, the random access report or the successful handover report, at least one of Received Signal Strength Indicator (RSSI) measurement results of the source cell and a neighboring cell, or identification information about the source cell and the neighboring cell indicating whether a channel has been occupied.

In some possible embodiments of the present disclosure, the random access information includes at least one of: a Random Access Channel (RACH) frequency resource used in each random access procedure; at least one of a Synchronization Signal Block (SSB), a Channel State Information Reference Signal (CSI-RS) index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In some possible embodiments of the present disclosure, when the target instruction is used to indicate the UE to perform a Primary Secondary cell (PSCell) change or add a new PSCell, the radio communication method further includes, in the case that an LBT failure occurs in the random access procedure for a target PSCell, recording the LBT failure information in at least one of a Secondary Cell Group (SCG) failure information message or a Successful PSCell Change Report (SPR) in accordance with a PSCell change result or a PSCell addition result.

In some possible embodiments of the present disclosure, when the PSCell change result indicates a PSCell change failure or the PSCell addition result indicates that a PSCell addition failure, the recording the LBT failure information in at least one of the SCG failure information message or the successful PSCell change report includes recording the LBT failure information in the SCG failure information message, the LBT failure information includes LBT failure indication information, and the LBT failure indication information is used to indicate a PSCell change failure or a PSCell addition failure caused by the LBT failure.

In some possible embodiments of the present disclosure, when the PSCell change result indicates a PSCell change failure or the PSCell addition result indicates a PSCell addition failure, the recording the LBT failure information in at least one of the SCG failure information message or the successful PSCell change report includes recording the LBT failure information in random access information of the SCG failure information message, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, when the PSCell change result indicates a successful PSCell change and a successful PSCell change report is generated, or the PSCell addition result indicates a successful PSCell addition and a successful PSCell addition report is generated, the recording the LBT failure information in at least one of the SCG failure information message or the successful PSCell change report includes recording the LBT failure information in the random access information in the successful PSCell change report, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, the number of LBT failures in multiple random access preambles includes at least one of the number of LBT failures on each beam, or the total number of LBT failures on all beams.

In another aspect, the present disclosure provides in some embodiments a UE, including: an LBT module configured to determine that an LBT procedure is to be performed in accordance with a received target instruction; and a report recording module configured to, when the target instruction is used to indicate the UE to handover from a source cell to a first target cell in a spectrum-sharing network and an LBT failure occurs in a random access procedure for a target cell, record LBT failure information in at least one of an RLF report, a random access report or a successful handover report in accordance with a handover result.

In some possible embodiments of the present disclosure, the report recording module includes a first result recording unit configured to, when the handover result indicates a handover failure, record first result information in the RLF report, and the first result information indicates that the handover failure is caused by continuous LBT failures on all BWPs.

In some possible embodiments of the present disclosure, the report recording module includes a second result recording unit configured to, when the handover result indicates a handover success, record second result information in at least one of the RLF report, the random access report or the successful handover report, and the second result information is random access information indicating an LBT failure on at least one BWP before the handover success.

In some possible embodiments of the present disclosure, the report recording module further includes: a reestablishment triggering module configured to trigger RRC connection reestablishment to a second target cell in the spectrum-sharing network to perform the LBT procedure; and a third result recording unit configured to, when continuous LBT failures occur on all the BWPs, record third result information in the RLF report. The third result information indicates that an RRC connection reestablishment request fails to be transmitted when the continuous LBT failures occur on all the BWPs, and the second target cell is the source cell or the first target cell, or a cell other than the source cell and the first target cell.

In some possible embodiments of the present disclosure, the first result information is recorded in the RLF report in the form of first specified identification information.

In some possible embodiments of the present disclosure, the first result information further includes random access information indicating an LBT failure of the UE on all the BWPs.

In some possible embodiments of the present disclosure, the third result information further includes UE reestablishment cell identification information, the third result information is recorded in the RLF report in the form of second specified identification information, and the UE reestablishment cell identification information is set as a null value in the second specified identification information.

In some possible embodiments of the present disclosure, the third result information further includes UE reestablishment cell identification information, and the third result information is expressed through setting the UE reestablishment cell identification information as a null value in the second specified identification information.

In some possible embodiments of the present disclosure, the report recording module further includes a complementary recording unit configured to record, in at least one of the RLF report, the random access report or the successful handover report, at least one of RSSI measurement results of the source cell and a neighboring cell, or identification information about the source cell and the neighboring cell indicating whether a channel has been occupied.

In some possible embodiments of the present disclosure, the random access information includes at least one of: a RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In some possible embodiments of the present disclosure, when the target instruction is used to indicate the UE to perform a PSCell change or add a new PSCell, the UE further includes a failure recording module configured to, in the case that an LBT failure occurs in the random access procedure for a target PSCell, record the LBT failure information in at least one of an SCG failure information message or a successful PSCell change report in accordance with a PSCell change result or a PSCell addition result.

In some possible embodiments of the present disclosure, when the PSCell change result indicates a PSCell change failure or the PSCell addition result indicates that a PSCell addition failure, the failure recoding module is specifically configured to record the LBT failure information in the SCG failure information message, the LBT failure information includes LBT failure indication information, and the LBT failure indication information is used to indicate a PSCell change failure or a PSCell addition failure caused by the LBT failure.

In some possible embodiments of the present disclosure, when the PSCell change result indicates a PSCell change failure or the PSCell addition result indicates a PSCell addition failure, the failure recording module is specifically configured to record the LBT failure information in random access information of the SCG failure information message, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, when the PSCell change result indicates a successful PSCell change and a successful PSCell change report is generated, or the PSCell addition result indicates a successful PSCell addition and a successful PSCell addition report is generated, the failure recording module is specifically configured to record the LBT failure information in the random access information in the successful PSCell change report, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, the number of LBT failures in multiple random access preambles includes at least one of the number of LBT failures on each beam, or the total number of LBT failures on all beams.

In yet another aspect, the present disclosure provides in some embodiments a UE, including a memory, a transceiver and a processor. The memory is configured to store therein a computer program, and the transceiver is configured to transmit and receive data under the control of the processor. The processor is configured to read the computer program in the memory, so as to perform the following operations: determining that an LBT procedure is to be performed in accordance with a received target instruction; and when the target instruction is used to indicate the UE to handover from a source cell to a first target cell in a spectrum-sharing network and an LBT failure occurs in a random access procedure for a target cell, recording LBT failure information in at least one of an RLF report, a random access report or a successful handover report in accordance with a handover result.

In some possible embodiments of the present disclosure, the recording the LBT failure information in the RLF report in accordance with the handover result includes, when the handover result indicates a handover failure, recording first result information in the RLF report, and the first result information indicates that the handover failure is caused by continuous LBT failures on all BWPs.

In some possible embodiments of the present disclosure, the recording the LBT failure information in at least one of the RLF report, the random access report or the successful handover report in accordance with the handover result includes, when the handover result indicates a handover success, recording second result information in at least one of the RLF report, the random access report or the successful handover report, and the second result information is random access information indicating an LBT failure on at least one BWP before the handover success.

In some possible embodiments of the present disclosure, subsequent to recording the first result information in the RLF report, the processor is further configured to: trigger RRC connection reestablishment to a second target cell in the spectrum-sharing network to perform the LBT procedure; and when continuous LBT failures occur on all the BWPs, record third result information in the RLF report. The third result information indicates that an RRC connection reestablishment request fails to be transmitted when the continuous LBT failures occur on all the BWPs, and the second target cell is the source cell or the first target cell, or a cell other than the source cell and the first target cell.

In some possible embodiments of the present disclosure, the first result information is recorded in the RLF report in the form of first specified identification information.

In some possible embodiments of the present disclosure, the first result information further includes random access information indicating an LBT failure of the UE on all the BWPs.

In some possible embodiments of the present disclosure, the third result information further includes UE reestablishment cell identification information, the third result information is recorded in the RLF report in the form of second specified identification information, and the UE reestablishment cell identification information is set as a null value in the second specified identification information.

In some possible embodiments of the present disclosure, the third result information further includes UE reestablishment cell identification information, and the third result information is expressed through setting the UE reestablishment cell identification information as a null value in the second specified identification information.

In some possible embodiments of the present disclosure, the processor is further configured to record, in at least one of the RLF report, the random access report or the successful handover report, at least one of RSSI measurement results of the source cell and a neighboring cell, or identification information about the source cell and the neighboring cell indicating whether a channel has been occupied.

In some possible embodiments of the present disclosure, the random access information includes at least one of: a RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In some possible embodiments of the present disclosure, when the target instruction is used to indicate the UE to perform a Primary Secondary cell (PSCell) change or add a new PSCell, the processor is further configured to, in the case that an LBT failure occurs in the random access procedure for a target PSCell, record the LBT failure information in at least one of an SCG failure information message or a successful PSCell change report in accordance with a PSCell change result or a PSCell addition result.

In some possible embodiments of the present disclosure, when the PSCell change result indicates a PSCell change failure or the PSCell addition result indicates that a PSCell addition failure, the LBT failure information includes LBT failure indication information, and the LBT failure indication information is used to indicate a PSCell change failure or a PSCell addition failure caused by the LBT failure.

In some possible embodiments of the present disclosure, when the PSCell change result indicates a PSCell change failure or the PSCell addition result indicates a PSCell addition failure, the recording the LBT failure information in at least one of the SCG failure information message or the successful PSCell change report includes recording the LBT failure information in random access information of the SCG failure information message, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, the number of LBT failures in multiple random access preambles includes at least one of the number of LBT failures on each beam, or the total number of LBT failures on all beams.

In still yet another aspect, the present disclosure provides in some embodiments an electronic device, including a memory, a processor, and a computer program stored in the memory and executed by the processor. The processor is configured to execute the computer program so as to implement the above-mentioned radio communication method.

In still yet another aspect, the present disclosure provides in some embodiments a computer-readable storage medium storing therein a computer program. The computer program is executed by a processor so as to implement the above-mentioned radio communication method.

In still yet another aspect, the present disclosure provides in some embodiments a computer program including a computer instruction. The computer instruction is stored in a computer-readable storage medium, and a processor of a computer device reads and executes the computer instruction in the computer-readable storage medium so as to implement the above-mentioned radio communication method.

### BRIEF DESCRIPTION OF THE DRAWINGS

In order to illustrate the technical solutions of the present disclosure or the related art in a clearer manner, the drawings desired for the present disclosure will be described hereinafter briefly.
FIG. 1 is a schematic view showing architecture of a system according to one embodiment of the present disclosure;
FIG. 2 is a flow chart of a radio communication method according to one embodiment of the present disclosure;
FIG. 3 is a schematic view showing the interaction in a scenario where a UE handovers to a wrong cell in the related art;
FIG. 4 is a schematic view showing the interaction in a scenario where the UE handovers to a wrong cell according to one embodiment of the present disclosure;
FIG. 5 is a schematic view showing the interaction in a handover critical failure scenario in the related art;
FIG. 6 is a schematic view showing the interaction in a handover critical failure scenario according to one embodiment of the present disclosure;
FIG. 7 is a schematic view showing the interaction in a too-early handover scenario in the related art;
FIG. 8 is a schematic view showing the interaction in a too-early handover scenario according to one embodiment of the present disclosure;
FIG. 9 is a schematic view showing a UE according to one embodiment of the present disclosure;
FIG. 10 is another schematic view showing the UE according to one embodiment of the present disclosure; and
FIG. 11 is a schematic view showing an electronic device according to one embodiment of the present disclosure.

### DETAILED DESCRIPTION

The present disclosure will be described hereinafter in conjunction with the embodiments and the drawings. Identical or similar reference numbers in the drawings represent an identical or similar element or elements having an identical or similar function. The following embodiments are for illustrative purposes only, but shall not be used to limit the scope of the present disclosure.

Unless otherwise defined, such words as "one" or "one of' are merely used to represent the existence of at least one member, rather than to limit the number thereof. Such words as "include" or "including" intend to indicate that there are the features, integers, steps, operations, elements and/or assemblies, without excluding the existence or addition of one or more other features, integers, steps, operations, elements, assemblies and/or combinations thereof. In the case that one element is connected or coupled to another element, it may be directly connected or coupled to the other element, or an intermediate element may be arranged therebetween. At this time, the element may be connected or coupled to the other element in a wireless or wired manner. In addition, the expression "and/or" is used to indicate the existence of all or any one of one or more of listed items, or combinations thereof.

In order to make the objects, the technical solutions and the advantages of the present disclosure more apparent, the present disclosure will be described hereinafter in a clear and complete manner in conjunction with the drawings and embodiments.

At first, some terms involved in the embodiments of the present disclosure will be described hereinafter.

### (1) Spectrum-sharing network

Different from a traditional network in which dedicated spectrums are adopted by a plurality of cells respectively, in the spectrum-sharing network, spectrum information is shared by different cells in a plurality of networks. In other words, a shared spectrum is used by a plurality of networks. Hence, before the data transmission in the spectrum-sharing network, a base station and a UE need to perform an LBT procedure, so as to determine whether the shared spectrum is occupied by the other cell. The shared spectrum is used only when there is an idle channel.

### (2) UE

The UE performs the LBT procedure on the basis of BWPs. When a random access resource for a plurality of BWPs is configured by a network for the UE in one cell and continuous LBT failures occur for the UE on a special cell (SpCell), the UE handovers to the other BWP for the LBT procedure. The SpCell includes a Primary Cell (PCell) and a PSCell.

### (3) RSSI

Usually, the RSSI is used by a high layer to evaluate whether a target cell for frequency-sharing is occupied by the other network. At a handover triggering phase, the network selects an idle target cell for access in accordance with a RSSI measurement result of the target cell.

### (4) RLF report

The RLF report is a report recorded at a UE side, and it mainly relates to two recording scenarios, i.e., handover failure and RLF. One RLF report is recorded merely for one scenario.

The RLF report includes at least one of: a measurement result of a previous serving cell of the UE; a measurement result of a neighboring cell after the UE determines that a handover failure or an RLF occurs; UE position information; identification information about a cell where the handover failure or RLF failure occurs for the UE, e.g., Cell Global Identity (CGI) or Physical Cell Identity (PCI), and a frequency point; identification information about a cell where a connection is reestablished for the UE; a report timer of the UE; a duration from a time point at which the reception of a handover initialization message is confirmed by the UE previously to a time point at which a connection failure occurs; a cause of the connection failure, e.g., the handover failure or the RLF; a Cell-Radio Network Temporary Identifier (C-RNTI) used by the UE when the connection failure occurs; a sub-cause of the RLF, e.g., T310 is expired, a random access issue occurs, the maximum number of retransmission occurs at a Radio Link Control (RLC) structure layer, or a Beam Failure Recovery Failure (BFRF) occurs; a duration from a time point at which the connection failure is confirmed by the UE to a time point at which the RLF report is reported by the UE; a Tracking Area Code (TAC) of a cell where the connection failure occurs; a Blue Tooth (BT)-related result; or a Wireless Local Area Network (WLAN).

After the UE has recorded the RLF report, the UE notifies the network to obtain the RLF report through an RRC connection establishment complete message, an RRC connection reconfiguration complete message, an RRC connection reestablishment complete message or an RRC resume complete message. The network transmits a UE information request message to the UE, and the UE transmits the RLF report to the network through a UE information response message.

### (5) MRO

The MRO is mainly used to solve such a problem as the failure in a UE mobility procedure, and assist the network optimization. In the case of the handover failure or RLF, the UE records the RLF report. After the handover failure, the UE performs cell selection, and accesses to the network again through an RRC connection reestablishment procedure or RRC connection establishment procedure, and notifies the network that the RLF report is reserved at the UE side. The network obtains the RLF report for the purpose of network optimization if necessary.

The MRO characteristic is mainly used to find and solve parameter configuration problems in the mobility procedure, and three types of failures have been defined, i.e., too-early handover, too-late handover, and handover to wrong cell.

Too Late Handover: an RLF occurs after the UE has stayed for a long period of time in the cell, and the UE attempts to re-establish the radio link connection in a different cell.

Too Early Handover: an RLF occurs shortly after a successful handover from a source cell to or a handover failure occurs during the handover procedure, and the UE attempts to re-establish the radio link connection in the source cell.

Handover to Wrong Cell: an RLF occurs shortly after a successful handover from a source cell to a target cell or a handover failure occurs during the handover procedure, and the UE attempts to re-establish the radio link connection in a cell other than the source cell and the target cell.

A key for determining the type of the failure lies in whether the UE stably resides in the target cell after the handover has been completed. When the UE stably resides in the target cell, the failure is irrelevant to the previous handover. And when the UE fails to stably resides in the target cell, the failure may be caused by the previous handover, e.g., an inappropriate target cell is selected.

Whether the UE stably resides in the target cell is determined in accordance with a UE report timer in the RLF report. When a value of the report timer is small, it means that the UE fails to stably reside in the target cell; when the value is large, it means that the UE stably resides in the target cell after the handover; and when the value is 0, it means that there is no handover procedure.

### (6) Random access report

An existing random access report merely includes relevant information when the random access procedure is performed successfully.

### (7) Successful handover report

The successful handover report includes information recorded by the UE in the handover procedure. Although the handover procedure is performed successfully, there may exist some critical success or failure information in the handover procedure, and the UE records the successful handover report so as to help the network to optimize handover parameters.

After the UE has recorded the random access report or the successful handover report, the UE notifies the network to obtain the report through the RRC connection establishment complete message, the RRC connection reconfiguration complete message, the RRC connection reestablishment complete message or the RRC resume complete message. The network transmits the UE information request message to the UE, and the UE transmits the random access report and/or the successful handover report to the network through the UE information response message.

The MRO technology is used to prevent the occurrence of the RLF or handover failure in the handover procedure through analyzing the RLF report and optimizing the handover parameter configuration. However, the LBT procedure needs to be performed before the UE newly accesses a spectrum-sharing network, and the LBT failure information is currently not recorded in the RLF report. Hence, during the parameter optimization, it is impossible to determine whether the RLF or handover failure is caused by the inappropriate handover parameter configuration or the LBT failure, and thereby a wrong parameter optimization result is provided.

An object of the present disclosure is to provide a radio communication method, a UE, an electronic device, and a computer-readable storage medium, so as to at least solve the above-mentioned problems.

The technical solutions in the embodiments of the present disclosure and how to solve the above-mentioned problems through the technical solutions will be described hereinafter in conjunction with the specific embodiments. The specific embodiments will be combined together, and some identical or similar concepts or processes will not be particularly defined in some embodiments of the present disclosure. The present disclosure will be described hereinafter in conjunction with the drawings.

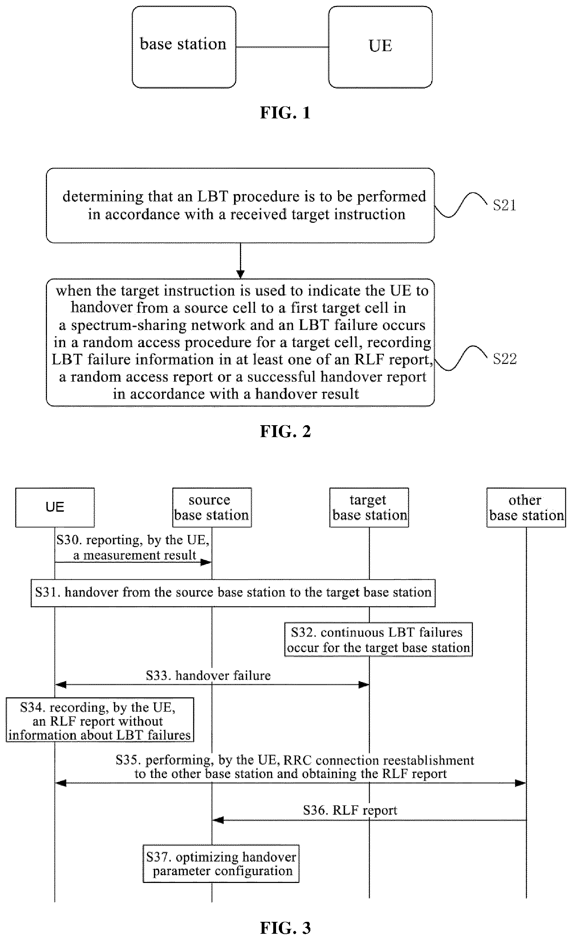

FIG. 1 is a schematic view showing architecture of a system according to one embodiment of the present disclosure.

As shown in FIG. 1, the system includes a base station and a UE, but the present disclosure is not limited thereto. For example, the system may include two or more UEs, which will not be particularly defined herein.

The base station in the embodiments of the present disclosure is a Node B (NB) for a Universal Mobile Telecommunications System (UMTS), an eNodeB (eNB) for Long Term Evolution (LTE), or a base station or controller for a 5^{th}-Generation (5G) mobile communication system.

The UE in the embodiments of the present disclosure is, but not limited to, a Mobile Station (MS), a mobile terminal, a mobile telephone, a handset or portable equipment.

In the embodiments of the present disclosure, a shared spectrum is a non-licensed spectrum. In some possible embodiments of the present disclosure, the shared spectrum is a licensed spectrum purchased by an operator or institution and shared by the publics.

The scheme in the embodiments of the present disclosure is based on the above-mentioned system architecture. It should be appreciated that, in the case of no conflict, the embodiments and the features therein may be combined in any form.

The present disclosure provides in some embodiments a radio communication method which, as shown in FIG. 2, includes: S21 of determining that an LBT procedure is to be performed in accordance with a received target instruction, the target instruction being used to indicate the UE to handover from a source cell to a first target cell in a spectrum-sharing network; and S22 of, when the target instruction is used to indicate the UE to handover from the source cell to the first target cell in the spectrum-sharing network and an LBT failure occurs in a random access procedure to the first target cell, recording LBT failure information in at least one of an RLF report, a random access report or a successful handover report in accordance with a handover result.

In some possible embodiments of the present disclosure, the UE transmits measurement report information to a base station in the source cell (also called as a source base station), and the source base station determines whether the UE is to initiate a handover operation in accordance with the measurement report information, i.e., whether the UE is to handover from the source cell to the first target cell in the spectrum-sharing network. When the handover operation is to be initiated, the source base station transmits the target instruction to the UE, and the UE performs the handover operation from the source cell to the first target cell in the spectrum-sharing network in accordance with the target instruction.

In some possible embodiments of the present disclosure, the first target cell is a PCell.

In some possible embodiments of the present disclosure, the LBT procedure needs to be performed by the UE during the handover to the spectrum-sharing network.

The handover result of handovering from the source cell to the first target cell indicates a handover failure or a handover success. In the case of the handover failure, it probably means that continuous LBT failures occur on all BWPs for the UE. In the case of the handover success, continuous LBT failures probably occur on at least one BWP for the UE in the handover procedure.

It should be appreciated that, the continuous LBT failures refer to a predetermined number of, e.g., three, continuous LBT failures, and the predetermined number will not be particularly defined herein. In the embodiments of the present disclosure, the LBT failure information is recorded in at least one of the RLF report, the random access report or the successful handover report when the LBT failure occurs on the BWP for the UE.

In a possible embodiment of the present disclosure, in the case of the handover failure, the LBT failure information is recorded in the RLF report and/or the random access report, and in the case of the handover success, the LBT failure information is recorded in at least one of the RLF report, the random access report or the successful handover report.

In the embodiments of the present disclosure, the LBT failure information includes information about the handover failure caused by the continuous LBT failures and random access information about the continuous LBT failures on the BWP.

In the related art, the UE does not record the LBT failure information in the RLF report, the random access report or the successful handover report, so it is impossible for the base station to obtain the information from the UE, and thereby the base station inaccurately determines a cause for the failure. However, in the embodiments of the present disclosure, the LBT failure information is added in the reports available for the base station, e.g., the RLF report, the random access report and the successful handover report, so as to help the base station to determine whether the cause for the failure is an inappropriate handover configuration or the LBT failure, and analyze an accurate cause for the handover failure or RLF, thereby to obtain an accurate parameter optimization result and achieve an MRO function of the spectrum-sharing network.

FIG. 3 illustratively shows an interaction procedure in a scenario where the UE handovers to a wrong cell in the related art. As shown in FIG. 3, the interaction procedure includes the following steps.

Step S30: the UE reports a measurement report to the source base station, and the source base station triggers the UE to perform base station handover in accordance with the measurement report.

Step S31: the UE determines to perform the handover from the source base station to a target base station in the spectrum-sharing network (i.e., a base station corresponding to a target cell).

Step S32: the target cell is the spectrum-sharing network, so the UE needs to perform the LBT procedure in the access procedure to the target cell, but continuous LBT failures occur.

Step S33: due to the continuous LBT failures, the handover failure occurs for the UE in the random access procedure.

Step S34: the UE records the RLF report not including the LBT failure information.

Step S35: the UE performs RRC connection reestablishment to the other base station, and the other base station obtains the RLF report from the UE and recorded by the UE.

Step S36: the other base station transmits the RLF report to the source base station so as to analyze the handover failure.

Step S37: the source base station directly optimizes the handover parameter configuration, so as to reduce a handover triggering threshold for the other cell.

The interaction scenario in FIG. 3 is just a typical type of failure in the case of handover to wrong cell, i.e., the UE fails to access the target cell in the handover procedure, and the UE attempts to access the other cell other than the target cell and the source cell through RRC connection reestablishment.

In the related art, the RLF report does not record the information about a result caused by the continuous LBT failures, so the source base station usually directly optimizes the handover parameter configuration, so as to reduce the handover triggering threshold for the other cell (e.g., reducing a level of a triggering signal), and increase a handover triggering threshold for the current target cell, thereby to facilitate the handover of the UE to the other cell. Actually, when the target cell is a spectrum-sharing network and the handover failure is caused by the continuous LBT failures, a fundamental reason lies in that the shared spectrum is occupied by the other cell. At this time, an actual effect is not ideal in the related art when the handover triggering threshold for the current target cell is increased by the base station.

In the embodiments of the present disclosure, when the handover result indicates the handover failure, first result information is recorded in the RLF report, and the first result information indicates that the handover failure is caused by continuous LBT failures on all BWPs. In this way, after obtaining the RLF report from the UE, the source base station determines, in accordance with the first result information, that the shared spectrum has been occupied by the other cell and there is no need for adjusting the handover triggering threshold, and then determines there is another more appropriate processing mode.

Based on the above, in a possible embodiment of the present disclosure, the first result information is recorded in the RLF report in the form of first specified identification information.

In the embodiments of the present disclosure, a new flag bit is added in the RLF report, and identification information about the handover failure caused by the continuous LBT failures on all the BWPs is recorded in the form of the first specified identification information. At this time, the base station determines a real cause for the handover failure in accordance with the flag bit, and thereby provides a more appropriate processing mode, e.g., determining whether the shared spectrum is occupied by the other network, and selecting an appropriate target cell for handover in accordance with an occupation identifier in a newly-added measurement result of a serving cell and a neighboring cell.

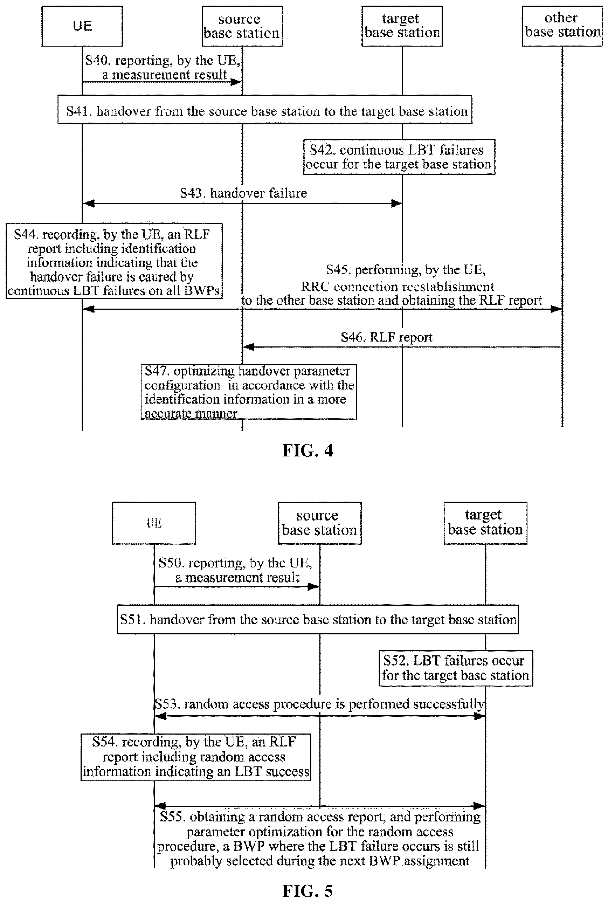

FIG. 4 illustratively shows an interaction procedure in a scenario where UE handovers to a wrong cell according to one embodiment of the present disclosure. As shown in FIG. 4, the interaction procedure includes the following steps.

Step S40: the UE reports a measurement report to the source base station, and the source base station triggers the UE to perform base station handover in accordance with the measurement report.

Step S41: the UE determines to perform the handover from the source base station to a target base station in the spectrum-sharing network (i.e., a base station corresponding to the target cell).

Step S42: because the target cell is the spectrum-sharing network, the UE needs to perform the LBT procedure in the access procedure to the target cell, but continuous LBT failures occur.

Step S43: due to the continuous LBT failures on all the BWPs, the handover failure occurs for the UE in the random access procedure.

Step S44: the UE records the RLF report, and the RLF report includes identification information indicating that the handover failure is caused by the continuous LBT failures on all the BWPs.

Step S45: the UE performs RRC connection reestablishment to the other base station, and the other base station obtains the RLF report from the UE and recorded by the UE.

Step S46: the other base station transmits the RLF report to the source base station so as to analyze the handover failure.

Step S47: the source base station obtains the accurate parameter optimization result in accordance with the identification information recorded in the RLF report.

In the embodiments of the present disclosure, apart from recording, in the form of the first specified identification information, the information indicating that the handover failure is caused by the continuous LBT failures on all the BWPs, information about the LBT failures on all the BWPs is added in random access information in the RLF report. In this way, it is able for the source base station to optimize the handover parameter configuration in a more accurate manner in accordance with the information about the LBT failures on all the BWPs collected by the UE in the random access procedure.

To be specific, in the embodiments of the present disclosure, the random access information is recorded in the form of a list, and each node in the list represents one piece of random access information. The random access information includes at least one of: an RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In the random access procedure to the target cell, the number of LBT failures in multiple random access preambles includes at least one of the number of LBT failures on each beam, or the total number of LBT failures on all beams.

The number of LBT failures on each beam is recorded in the form of a sequence, i.e., each element in the sequence represents the number of LBT failures on a corresponding beam. In a situation of recording the total number of LBT failures on all the beams, the total number is a sum of the number of LBT failures on each beam.

When the shared spectrum is occupied by the other cell and the random access failure occurs, it is further necessary to determine an appropriate target cell. Usually, a measurement result of neighboring cells is taken into consideration, so as to determine whether signal quality of one of the neighboring cells meet a predetermined condition. In addition, whether the source cell is suitable for continuously serving the UE is taken into consideration. However, it is impossible to accurately determine whether the shared spectrum is idle in accordance with the measurement result of the source cell and the neighboring cells.

In order to solve this problem, in a possible embodiment of the present disclosure, at least one of an RSSI measurement result about the source cell and the neighboring cell in unit of decibel relative to one milliwatt (dbm) or identification information about the source cell and the neighboring cell indicating whether a channel has been occupied is recorded in at least one of the RLF report, the random access report or the successful handover report.

Through adding the identification information indicating whether the channel has been occupied in the report, it is able to rapidly determine whether the shared spectrum is idle, thereby to improve the analysis efficiency.

FIG. 5 illustratively shows an interaction procedure in a UE handover critical failure scenario in the related art. As shown in FIG. 5, the interaction procedure includes the following steps.

Step S50: the UE reports a measurement report to the source base station, and the source base station triggers the UE to perform base station handover in accordance with the measurement report.

Step S51: the UE determines to perform the handover from the source base station to a target base station in the spectrum-sharing network.

Step S52: the LBT failure occurs for the UE in the random access procedure to the target cell.

Step S53: when the LBT procedure is performed successfully after multiple random access preamble, the UE accesses the target cell successfully.

Step S54: the UE records the random access report, and the random access report includes random access information indicating that the LBT procedure is performed successfully.

Step S55: the base station obtains the random access report. Because the random access report merely includes the random access information indicating that the LBT procedure is performed successfully, a BWP where the LBT failure occurs is still probably selected during the next BWP assignment.

In the random access procedure for the shared spectrum, when continuous LBT failures occur for one BWP, the UE performs the LBT procedure continuously on another BWP. However, the existing random access report merely includes the random access information indicating that the LBT procedure is performed successfully, i.e., it does not include the continuous LBT failures on some BWPs in the past. At this time, it is impossible for the base station side to determine a conflict between some BWPs and the other network through analyzing the random access report, so the base station may still select these resources during the next resource assignment. In this way, a handover delay and a handover failure rate may increase.

In order to solve this problem, in the embodiments of the present disclosure, the recording the LBT failure information in at least one of the RLF report, the random access report or the successful handover report in accordance with the handover result includes, when the handover result indicates a handover success, recording second result information in at least one of the RLF report, the random access report or the successful handover report, and the second result information is random access information indicating an LBT failure on at least one BWP before the handover success.

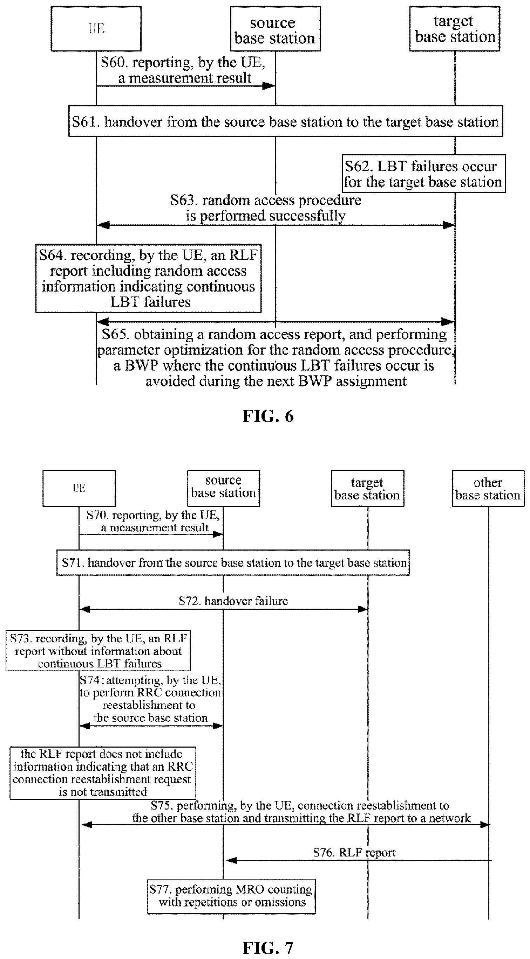

FIG. 6 illustratively shows an interaction procedure in a handover critical failure scenario according to one embodiment of the present disclosure. As shown in FIG. 6, the interaction procedure includes the following steps.

Step S60: the UE reports a measurement report to the source base station, and the source base station triggers the UE to perform base station handover in accordance with the measurement report.

Step S61: the UE determines to perform the handover from the source base station to a target base station in the spectrum-sharing network.

Step S62: the LBT failure occurs for the UE in the random access procedure to the target cell.

Step S63: when the LBT procedure is performed successfully after multiple random access preamble, the UE accesses the target cell successfully.

Step S64: the UE records the random access report, and the random access report includes random access information indicating the continuous LBT failures on at least one BWP before the handover success.

Step S65: the base station obtains the random access report, and avoids in selecting a BWP where the continuous LBT failures occur during the next BWP assignment in accordance with the random access information about the continuous LBT failures.

Based on the above, in a possible embodiment of the present disclosure, the random access information about the LBT failure on at least one BWP is recorded in the form of a list, and each node in the list represents the random access information. The random access information includes at least one of: a RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

When the handover result indicates the handover success, the second result information is recorded in at least one of the RLF report, the random access report or the successful handover report. The second result information is random access information indicating the LBT failure on at least one BWP before the handover success.

Based on the above, in a possible embodiment of the present disclosure, in the case of a handover critical failure, the RSSI measurement result of the source cell and the neighboring cell as well as the identification information about the source cell and the neighboring cell indicating whether the channel has been occupied are further recorded in at least one of the RLF report, the random access report or the successful handover report, so as to help the base station to select an appropriate target cell.

FIG. 7 illustratively shows an interaction procedure in a too-early handover scenario in the related art. As shown in FIG. 7, the interaction procedure includes the following steps.

Step S70: the UE reports a measurement report to the source base station, and the source base station triggers the UE to perform base station handover in accordance with the measurement report.

Step S71: the UE determines to perform the handover from the source base station to a target base station in the spectrum-sharing network.

Step S72: a handover failure occurs for the UE.

Step S73: the UE records the RLF report, but the RLF report does not include the LBT failure information, e.g., the identification information indicating that the handover failure is caused by the continuous LBT failures on all the BWPs.

Step S74: the UE attempts to perform RRC connection reestablishment to the source base station, and the RLF report does not include information indicating that an RRC connection reestablishment request is not transmitted.

Step S75: the UE accesses the network again through the other base station, and the other base station obtains the RLF report from the UE.

Step S76: the other base station transmits the RLF report to the source base station to perform the handover failure analysis.

Step S77: the source base station performs MRO counting with repetitions or omissions.

The above procedure is a typical too-early handover scenario, i.e., the UE fails to access the target cell in the handover procedure and attempts to access the source cell through RRC connection reestablishment. In the related art, the RLF report includes UE reestablishment cell identification information indicating that the UE attempts to access the source base station through connection reestablishment after the handover failure.

However, when the cell in which the RRC connection reestablishment occurs is the spectrum-sharing network, it is probably impossible for the UE to transmit the RRC connection reestablishment request to the base station due to the continuous LBT failures on all the BWPs. This is because, the shared spectrum is occupied by the other cell, and the UE has no chance to transmit the RRC connection reestablishment request to the base station. At this time, it should be recorded in the RLF report, so as to prevent the base station from performing the MRO counting with repetitions or omissions.

Based on the above, in a possible embodiment of the present disclosure, subsequent to recording the first result information in the RLF report, the radio communication method further includes: triggering RRC connection reestablishment to a second target cell in the spectrum-sharing network to perform the LBT procedure. After the handover of the UE to the first target cell fails, the RRC connection reestablishment is triggered to the other cell. In the random procedure of the RRC connection reestablishment to the second target cell, the other cell belongs to the spectrum-sharing network, so during the RRC connection reestablishment, the LBT procedure needs to be performed at first. When the LBT procedure has been performed successfully, the RRC connection reestablishment request is transmitted to the second target cell. When the continuous LBT failures occur on all the BWPs, it means that it is impossible for the UE to transmit the RRC connection reestablishment request.

When the continuous LBT failures occur on all the BWPs, third result information is recorded in the RLF report. The third result information indicates that the RRC connection reestablishment request fails to be transmitted when the continuous LBT failures occur on all the BWPs, and the second target cell is the source cell or the first target cell, or a cell other than the source cell and the first target cell.

In the embodiments of the present disclosure, the RLF report includes the information indicating that the RRC connection reestablishment request fails to be transmitted when the continuous LBT failures occur on all the BWPs, so it is able to prevent the base station from performing the MRO counting with repetitions or omissions.

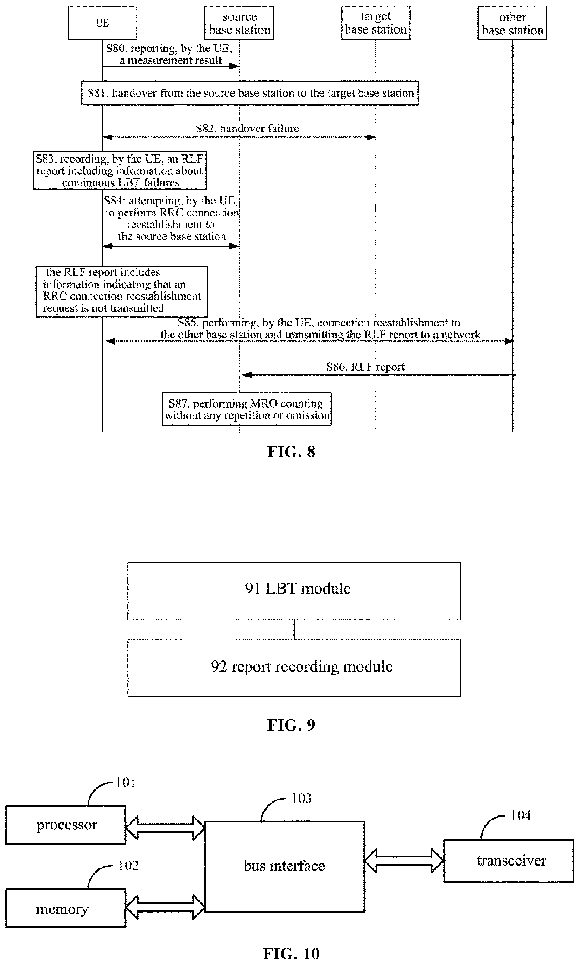

FIG. 8 illustratively shows an interaction procedure in a too-early handover scenario according to one embodiment of the present disclosure. As shown in FIG. 8, the interaction procedure includes the following steps.

Step S80: the UE reports a measurement report to the source base station, and the source base station triggers the UE to perform base station handover in accordance with the measurement report.

Step S81: the UE determines to perform the handover from the source base station to a target base station in the spectrum-sharing network.

Step S82: a handover failure occurs for the UE.

Step S83: the UE records the RLF report.

Step S84: the UE attempts to perform RRC connection reestablishment to the source base station, and the RLF report includes the third result information indicating that the RRC connection reestablishment request is not transmitted when the continuous LBT failures occur on all the BWPs.

Step S85: the UE accesses the network again through the other base station, and the other base station obtains the RLF report from the UE and recorded by the UE.

Step S86: the other base station transmits the RLF report to the source base station to perform the handover failure analysis.

Step S87: the source base station performs MRO counting without any repetition or omission.

Based on the above, in a possible embodiment of the present disclosure, the third result information indicating that the RRC connection reestablishment request fails to be transmitted due to the continuous LBT failures on all the BWPs includes UE reestablishment cell identification information, (a) the third result information is recorded in the RLF report in the form of second specified identification information, and the UE reestablishment cell identification information is set as a null value in the second specified identification information; or (b) the third result information further includes UE reestablishment cell identification information, and the third result information is expressed through setting the UE reestablishment cell identification information as a null value in the second specified identification information.

In the embodiments of the present disclosure, a field for a reestablishment cell flag in the RLF report is set as null. Upon the receipt of the RLF failure, the base station determines that the UE fails to transmit the RRC connection reestablishment request due to the continuous LBT failures on all the BWPs in accordance with the null value of the field.

Based on the above, the method in the embodiments of the present disclosure is also applied to a circumstance in a Multi-Radio Dual Connectivity (MR-DC) scenario where a random access failure occurs for a target PSCell due to the LBT failure in a PSCell addition procedure or a PSCell change procedure.

At first, some terms involved in the MR-DC will be described hereinafter.
1) The UE may be connected to a Master Node (MN) and one or more Secondary Node (SN), and perform signaling and/or data interaction with these network nodes. The MN and the SNs are all LTE/e-LTE/NR nodes. When the UE is connected to one MN and one SN, this connection is called as Dual Connectivity (DC).

When the UE is in a connected state, it is connected to one or more network nodes belonging to one or more Radio Access Technologies (RATs). For example, when the MN is an LTE node and the SN is an NR node, the connection is (NG) EN-DC; when the MN is an NR node and the SN is an LTE node, the connection is NE-DC; and when the MN and the SN are both NR nodes, the connection is NR-NR-DC.

2) Secondary Cell Group (SCG) refers to a group of serving cells under the SN in MR-DC, and it includes a PSCell and, if exists, one or more SCells.

There are two types of RLF, i.e., one for a Master Cell Group (MCG) and one for the SCG. When the RLF occurs for the MCG, the UE triggers an RRC connection reestablishment procedure, and when the RLF occurs for the SCG, the UE transmits SCG failure information to the MN.

The SCG failure information is used to notify the MN of information about the RLF occurring for the UE at the SN, information about a synchronization reconfiguration failure, information about an SCG configuration failure on a Signaling Radio Bearer (SRB) 3, and information about an SCG integrity check failure.

Contents in the SCG failure information mainly include an Identity (ID) of the PSCell where the failure occurs, an ID of a source PSCell where the PSCell change occurs, a duration from a time point when the PSCell change occurs to a time point when the SCG failure occurs, random access-related information recorded in the case of the random access failure, an SCG failure type, a UE measurement result, etc.

### 3) PSCell change procedure and PSCell addition procedure

The PSCell change (also called as secondary node change) procedure is triggered by the MN or SN. Taking the inter-SN PSCell change procedure as an example, a content of the UE is transferred from a source SN (S-SN) to a target SN (T-SN), and meanwhile the SCG configuration is changed from the source SN to the target SN at the UE side. In an EN-DC scenario, the PSCell change procedure triggered by the MN includes: triggering, by the MN, the PSCell change procedure, and transmitting an SgNB addition message to the target SN to request resource assignment; triggering, by the MN, an SgNB release message to the source SN, so as to request the source SN to stop transmitting data to the UE; configuring, by the MN, the UE to execute a new configuration; notifying, by the MN, the target SN that the configuration has been completed; performing, by the UE, random access in the target PSCell (when the target PSCell is a cell in the spectrum-sharing network, the LBT failure probably occurs in the random access procedure, and thereby the random access to the target PSCell fails); releasing, by the MN, a source SN configuration; and triggering, by the MN, the PSCell addition procedure (the LBT failure probably occurs in the random access procedure to the newly-added target PSCell, and thereby the random access failure occurs).

When a failure occurs in the PSCell change procedure or the PSCell addition procedure, upon the receipt of the SCG failure information, the network optimizes the network parameter configuration in accordance with the contents in the SCG failure information. However, the existing information does not include the LBT failure information, so the network may optimize the network parameter configuration inaccurately. For example, when the access failure occurs for the PSCell, usually the network performs the parameter optimization to increase a threshold for accessing the PSCell, so that the UE accesses the PSCell in the case of better signal quality. However, the random access failure is irrelevant to the bad signal quality, and instead, it is caused when the spectrum-sharing network has been occupied, so it is unnecessary to optimize the network parameter configuration.

Based on the above, in a possible embodiment of the present disclosure, when the target instruction is used to indicate the UE to perform the PSCell change procedure, the radio communication method further includes, in the case that the LBT failure occurs in the random access procedure to the target PSCell, recording the LBT failure information in the SCG failure information message in accordance with a PSCell change result.

In order to enable the network to know that the random access failure is caused by the LBT failure, the LBT failure information needs to be added in the SCG failure information message. To be specific, the SCG failure information message includes at least one of the followings. (1) The SCG failure information message is added with LBT failure indication information for indicating that the PSCell change failure or PSCell addition failure is caused by the LBT failure. (2) The random access information of the SCG failure information message is added with at least one of identification information indicating whether the continuous LBT failures occur in the LBT procedure before each random access preamble, or the number of LBT failures in multiple random access preambles in the random access procedure to the target cell. In some embodiments of the present disclosure, the number of LBT failures includes the number of LBT failures on each beam, or the total number of LBT failures on all beams.

Based on the above, there may also exist such a circumstance in the MR-DC scenario that the PSCell addition procedure or PSCell change procedure is performed successfully but a successful PSCell change report is generated. In the PSCell addition procedure or PSCell change procedure, when the UE accesses the target PSCell successfully but it takes a too long time period for such access, the UE is triggered to generate the successful PSCell change report.

When the network uses the successful PSCell change report for the parameter optimization, it is able to reduce the time for the random access to the target PSCell. When the time for the random access is too long, the handover critical failure occurs although without any random access failure, so the network still needs to perform the parameter optimization.

For example, a triggering threshold for the PSCell addition or PSCell change is adjusted, so as to provide better signal quality when the UE accesses the target PSCell next time. However, when the LBT failure occurs in the random access procedure to the target PSCell, it also takes a long time period for the random access procedure to the target PSCell for different reasons. To be specific, the current random access preamble fails due to the fact that the shared cell, i.e., the target PSCell, is occupied by the other network, rather than the signal quality.

In order to prevent the network from optimizing the network parameter wrongly, the LBT failure information needs to be added in the successful PSCell change report. To be specific, at least one of the followings is added in the random access information in the successful PSCell change report: (1) identification information indicating whether the continuous LBT failures occur in the LBT procedure before each random access preamble; or (2) the number of LBT failures in multiple random access preambles in the random access procedure to the target cell. The number of LBT failures includes at least one of the number of LBT failures on each beam, or the total number of LBT failures on all beams.

The number of LBT failures on each beam is recorded in the form of a sequence, i.e., each element in the sequence represents the number of LBT failures on a corresponding beam. When recording the total number of LBT failures on all the beams, the total number is a sum of the number of LBT failures on each beam.

The present disclosure further provides in some embodiments a UE which, as shown in FIG. 9, includes an LBT module 91 and a report recording module 92.

The LBT module 91 is configured to determine that an LBT procedure is to be performed in accordance with a received target instruction.

The report recording module 92 is configured to, when the target instruction is used to indicate the UE to handover from a source cell to a first target cell in a spectrum-sharing network and an LBT failure occurs in a random access procedure for a target cell, record LBT failure information in at least one of an RLF report, a random access report or a successful handover report in accordance with a handover result.

The UE in the embodiments of the present disclosure is used to perform the above-mentioned method, which will not be particularly defined herein. According to the UE in the embodiments of the present disclosure, the relevant information about the continuous LBT failures is recorded, so as to help the base station to determine whether the cause for the failure is an inappropriate handover configuration or the LBT failure, and analyze an accurate cause for the handover failure or RLF, thereby to obtain an accurate parameter optimization result and achieve an MRO function of the spectrum-sharing network.

In some possible embodiments of the present disclosure, the report recording module includes a first result recording unit configured to, when the handover result indicates a handover failure, record first result information in the RLF report, and the first result information indicates that the handover failure is caused by continuous LBT failures on all BWPs.

In some possible embodiments of the present disclosure, the report recording module includes a second result recording unit configured to, when the handover result indicates a handover success, record second result information in at least one of the RLF report, the random access report or the successful handover report, and the second result information is random access information indicating an LBT failure on at least one BWP before the handover success.

In some possible embodiments of the present disclosure, the report recording module further includes: a reestablishment triggering module configured to trigger RRC connection reestablishment to a second target cell in the spectrum-sharing network to perform the LBT procedure; and a third result recording unit configured to, when continuous LBT failures occur on all the BWPs, record third result information in the RLF report. The third result information indicates that an RRC connection reestablishment request fails to be transmitted when the continuous LBT failures occur on all the BWPs, and the second target cell is the source cell or the first target cell, or a cell other than the source cell and the first target cell.

In some possible embodiments of the present disclosure, the first result information is recorded in the RLF report in the form of first specified identification information.

In some possible embodiments of the present disclosure, the first result information further includes random access information indicating an LBT failure of the UE on all the BWPs.

In some possible embodiments of the present disclosure, the third result information further includes UE reestablishment cell identification information, the third result information is recorded in the RLF report in the form of second specified identification information, and the UE reestablishment cell identification information is set as a null value in the second specified identification information.

In some possible embodiments of the present disclosure, the third result information further includes UE reestablishment cell identification information, and the third result information is expressed through setting the UE reestablishment cell identification information as a null value in the second specified identification information.

In some possible embodiments of the present disclosure, the report recording module further includes a complementary recording unit configured to record, in at least one of the RLF report, the random access report or the successful handover report, at least one of RSSI measurement results of the source cell and a neighboring cell, or identification information about the source cell and the neighboring cell indicating whether a channel has been occupied.

In some possible embodiments of the present disclosure, the random access information includes at least one of: a RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In some possible embodiments of the present disclosure, when the target instruction is used to indicate the UE to perform a PSCell change or add a new PSCell, the UE further includes a failure recording module configured to, in the case that an LBT failure occurs in the random access procedure for a target PSCell, record the LBT failure information in at least one of an SCG failure information message or a successful PSCell change report in accordance with a PSCell change result or a PSCell addition result.

In some possible embodiments of the present disclosure, when the PSCell change result indicates a PSCell change failure or the PSCell addition result indicates that a PSCell addition failure, the failure recoding module is specifically configured to record the LBT failure information in the SCG failure information message, the LBT failure information includes LBT failure indication information, and the LBT failure indication information is used to indicate a PSCell change failure or a PSCell addition failure caused by the LBT failure.

In some possible embodiments of the present disclosure, when the PSCell change result indicates a PSCell change failure or the PSCell addition result indicates a PSCell addition failure, the failure recording module is specifically configured to record the LBT failure information in random access information of the SCG failure information message, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, when the PSCell change result indicates a successful PSCell change and a successful PSCell change report is generated, or the PSCell addition result indicates a successful PSCell addition and a successful PSCell addition report is generated, the failure recording module is specifically configured to record the LBT failure information in the random access information in the successful PSCell change report, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, the number of LBT failures in multiple random access preambles includes at least one of the number of LBT failures on each beam, or the total number of LBT failures on all beams.

The present disclosure further provides in some embodiments a UE, which includes a memory 102, a transceiver 104 and a processor 101. The memory 102 is configured to store therein a computer program. The transceiver 104 is configured to transmit and receive data under the control of the processor 101. The processor 101 is configured to read the computer program in the memory 102, so as to perform the following operations: determining that an LBT procedure is to be performed in accordance with a received target instruction; and when the target instruction is used to indicate the UE to handover from a source cell to a first target cell in a spectrum-sharing network and an LBT failure occurs in a random access procedure for a target cell, recording LBT failure information in at least one of an RLF report, a random access report or a successful handover report in accordance with a handover result.

In some possible embodiments of the present disclosure, the recording the LBT failure information in the RLF report in accordance with the handover result includes, when the handover result indicates a handover failure, recording first result information in the RLF report, and the first result information indicates that the handover failure is caused by continuous LBT failures on all BWPs.

In some possible embodiments of the present disclosure, the recording the LBT failure information in at least one of the RLF report, the random access report or the successful handover report in accordance with the handover result includes, when the handover result indicates a handover success, recording second result information in at least one of the RLF report, the random access report or the successful handover report, and the second result information is random access information indicating an LBT failure on at least one BWP before the handover success.

In some possible embodiments of the present disclosure, subsequent to recording the first result information in the RLF report, the processor is further configured to: trigger RRC connection reestablishment to a second target cell in the spectrum-sharing network to perform the LBT procedure; and when continuous LBT failures occur on all the BWPs, record third result information in the RLF report. The third result information indicates that an RRC connection reestablishment request fails to be transmitted when the continuous LBT failures occur on all the BWPs, and the second target cell is the source cell or the first target cell, or a cell other than the source cell and the first target cell.

In some possible embodiments of the present disclosure, the first result information is recorded in the RLF report in the form of first specified identification information.

In some possible embodiments of the present disclosure, the first result information further includes random access information indicating an LBT failure of the UE on all the BWPs.

In some possible embodiments of the present disclosure, the third result information further includes UE reestablishment cell identification information, the third result information is recorded in the RLF report in the form of second specified identification information, and the UE reestablishment cell identification information is set as a null value in the second specified identification information.

In some possible embodiments of the present disclosure, the third result information further includes UE reestablishment cell identification information, and the third result information is expressed through setting the UE reestablishment cell identification information as a null value in the second specified identification information.

In some possible embodiments of the present disclosure, the processor is further configured to record, in at least one of the RLF report, the random access report or the successful handover report, at least one of RSSI measurement results of the source cell and a neighboring cell, or identification information about the source cell and the neighboring cell indicating whether a channel has been occupied.

In some possible embodiments of the present disclosure, the random access information includes at least one of: a RACH frequency resource used in each random access procedure; at least one of an SSB, a CSI-RS index, or information about the number of random access preambles transmitted in the SSB and the CSI-RS index involved in each random access procedure; indication information indicating whether cell signal quality in each random access preamble in each random access procedure is greater than an SSB threshold and indication information indicating whether a contention-based random access procedure is detected in each random access preamble; indication information indicating whether each preamble in a 2-step random access procedure falls back to a 4-step random access procedure; cell signal quality measured before the 2-step random access procedure; identification information including whether continuous LBT failures occurs in the LBT procedure before each random access procedure; or the number of LBT failures in multiple random access preambles in the random access procedure for the target cell.

In some possible embodiments of the present disclosure, when the target instruction is used to indicate the UE to perform a Primary Secondary cell (PSCell) change or add a new PSCell, the processor is further configured to, in the case that an LBT failure occurs in the random access procedure for a target PSCell, record the LBT failure information in at least one of an SCG failure information message or a successful PSCell change report in accordance with a PSCell change result or a PSCell addition result.

In some possible embodiments of the present disclosure, when the PSCell change result indicates a PSCell change failure or the PSCell addition result indicates that a PSCell addition failure, the LBT failure information includes LBT failure indication information, and the LBT failure indication information is used to indicate a PSCell change failure or a PSCell addition failure caused by the LBT failure.

In some possible embodiments of the present disclosure, when the PSCell change result indicates a PSCell change failure or the PSCell addition result indicates a PSCell addition failure, the recording the LBT failure information in at least one of the SCG failure information message or the successful PSCell change report includes recording the LBT failure information in random access information of the SCG failure information message, and the LBT failure information includes at least one of identification information indicating whether continuous LBT failures occur in the LBT procedure before each random access preamble, or the number of LBT failures in multiple random access preambles in the random access procedure for the target cell.

In some possible embodiments of the present disclosure, the number of LBT failures in multiple random access preambles includes at least one of the number of LBT failures on each beam, or the total number of LBT failures on all beams.

In FIG. 10, bus architecture may include a number of buses and bridges connected to each other, so as to connect various circuits for one or more processors 101 and one or more memories 102. In addition, as is known in the art, the bus architecture may be used to connect any other circuits, such as a circuit for a peripheral device, a circuit for a voltage stabilizer and a power management circuit. A bus interface 103 may be provided, and the transceiver 104 may consist of a plurality of elements, i.e., a transmitter and a receiver for communication with any other devices over a transmission medium. The transmission medium includes a wireless channel, a wired channel, or an optical cable. The processor 101 may take charge of managing the bus architecture as well as general processings. The memory 102 may store therein data for the operation of the processor 101.

The processor 101 is a Central Processing Unit (CPU), an Application Specific Integrated Circuit (ASIC), a Field-Programmable Gate Array (FPGA) or a Complex Programmable Logic Device (CPLD). The processor 101 may also use multi-core architecture.

The processor 101 is configured to call the computer program in the memory 102, so as to implement the above-mentioned method in accordance with obtained executable instructions. The processor 101 may also be physically separated from the memory 102.

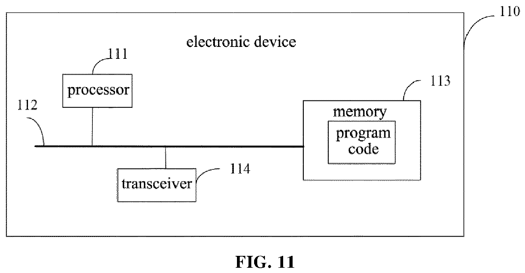

The present disclosure further provides in some embodiments an electronic device 110 which, as shown in FIG. 11, includes a processor 111 and a memory 113. The processor 111 is connected to the memory 113, e.g., via a bus 112. In some possible embodiments of the present disclosure, the electronic device 110 further includes a transceiver 114. It should be appreciated that, in actual use, the quantity of transceiver 114 is not limited to one, and the structure of the electronic device 110 is not construed as limiting the scope of the present disclosure.

The processor 111 is a CPU, a general-purpose processor, a DSP, an ASIC, an FPGA, or any other programmable logic element, a transistor logic element, a hardware member, or a combination thereof. The processor 111 is used to implement or execute the logic boxes, modules and circuits described in the embodiments of the present disclosure. The processor 111 may also be a combination of computing functions, e.g., a combination of microprocessors, or a combination of a DSP and a microprocessor.

The bus 112 includes a channel through which information is transmitted between the above-mentioned assemblies. The bus 112 may be a Peripheral Component Interconnect (PCI) bus or an Extended Industry Standard Architecture (EISA) bus, and it includes an address bus, a data bus, a control bus, etc. For ease of description, FIG. 11 merely shows one bus indicated by a thick line, but it does not mean that there is merely one bus or one type of buses.

The memory 113 includes, but not limited to, a Read-Only Memory (ROM) or any other static memory capable of storing therein static information and instructions, a Random Access Memory (RAM) or any other dynamic memory capable of storing therein information and instructions, an Electrically Erasable Programmable Read-Only Memory (EEPROM), a Compact Disc Read-Only Memory (CD-ROM) or any other optical disc (compact disc, laser disc, digital general disc or blue-ray disc), magnetic disc or any other magnetic memory, or any other storage medium capable of carrying or storing therein instructions or desired program codes in a data form and capable of being accessed by a computer.

The memory 113 is configured to store therein program codes for implementing the above-mentioned method. The program codes in the memory 113 are executed by the processor 111 so as to implement the above-mentioned method.

The present disclosure further provides in some embodiments a computer-readable storage medium storing therein a computer program. The computer program is executed by a computer so as to implement the above-mentioned method. As compared with the related art, the relevant information about the continuous LBT failures is added, so as to help the base station to determine whether the cause for the failure is an inappropriate handover configuration or the LBT failure, and analyze an accurate cause for the handover failure or RLF, thereby to obtain an accurate parameter optimization result and achieve an MRO function of the spectrum-sharing network.

The present disclosure further provides in some embodiments a computer program including a computer instruction. The computer instruction is stored in a computer-readable storage medium, and executed by a processor of a computing device so as to implement the above-mentioned method. As compared with the related art, the relevant information about the continuous LBT failures is added, so as to help the base station to determine whether the cause for the failure is an inappropriate handover configuration or the LBT failure, and analyze an accurate cause for the handover failure or RLF, thereby to obtain an accurate parameter optimization result and achieve an MRO function of the spectrum-sharing network.

It should be appreciated that, although with arrows, the steps in the flow charts may not be necessarily performed in an order indicated by the arrows. Unless otherwise defined, the order of the steps may not be strictly defined, i.e., the steps may also be performed in another order. In addition, each of at least parts of the steps in the flow charts may include a plurality of sub-steps or stages, and these sub-steps or stages may not be necessarily performed at the same time, i.e., they may also be performed at different times. Furthermore, these sub-steps or stages may not be necessarily performed sequentially, and instead, they may be performed alternately with the other steps or at least parts of sub-steps or stages of the other steps.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A radio communication method performed by a User Equipment (UE), the radio communication method comprising:
determining that a Listen Before Talk (LBT) procedure is to be performed in accordance with a received target instruction, wherein the target instruction is used to indicate the UE to handover from a source cell to a first target cell in a spectrum-sharing network; and
when an LBT failure occurs in an access procedure to the first target cell, recording LBT failure information in at least one of a Radio Link Failure (RLF) report, a random access report, or a Successful Handover Report (SHR) in accordance with a handover result.

2. The radio communication method according to claim 1, wherein the recording the LBT failure information in the RLF report in accordance with the handover result comprises, when the handover result indicates a handover failure, recording first result information in the RLF report, and the first result information indicates that the handover failure is caused by continuous LBT failures on all Bandwidth Parts (BWPs).

3. The radio communication method according to claim 1, wherein the recording the LBT failure information in at least one of the RLF report, the random access report or the successful handover report in accordance with the handover result comprises, when the handover result indicates a handover success, recording second result information in at least one of the RLF report, the random access report or the successful handover report, and the second result information is random access information indicating an LBT failure on at least one BWP before the handover success.

4. The radio communication method according to claim 2, wherein subsequent to recording the first result information in the RLF report, the radio communication method further comprises:
triggering Radio Resource Control (RRC) connection reestablishment to a second target cell in the spectrum-sharing network to perform the LBT procedure; and
when continuous LBT failures occur on all the BWPs, recording third result information in the RLF report,
wherein the third result information indicates that an RRC connection reestablishment request fails to be transmitted when the continuous LBT failures occur on all the BWPs, and the second target cell is the source cell or the first target cell, or a cell other than the source cell and the first target cell.

5. The radio communication method according to claim 2, wherein the first result information is recorded in the RLF report in the form of first specified identification information.

6. The radio communication method according to claim 2, wherein the first result information further comprises random access information indicating an LBT failure of the UE on all the BWPs.

7. The radio communication method according to claim 4, wherein the third result information further comprises UE reestablishment cell identification information, the third result information is recorded in the RLF report in the form of second specified identification information, and the UE reestablishment cell identification information is set as a null value in the second specified identification information.

8. The radio communication method according to claim 4, wherein the third result information further comprises UE reestablishment cell identification information, and the third result information is expressed through setting the UE reestablishment cell identification information as a null value in the second specified identification information.

9. The radio communication method according to any one of claims 1 to 8, further comprising recording, in at least one of the RLF report, the random access report or the successful handover report, at least one of Received Signal Strength Indicator (RSSI) measurement results of the source cell and a neighboring cell, or identification information about the source cell and the neighboring cell indicating whether a channel has been occupied.

10. The radio communication method according to claim 3 or 6, wherein the random access information comprises at least one of:
a Random Access Channel (RACH) frequency resource used in each random access procedure;
at least one of a Synchronization Signal Block (SSB), a downlink Channel State Information Reference Signal (CSI-RS) index, or information about the number of random access preambles transmitted in the SSB and the CSI-RS index involved in each random access procedure;
indication information indicating whether cell signal quality in each random access preamble in each random access procedure is greater than an SSB threshold and indication information indicating whether a contention-based random access procedure is detected in each random access preamble;
indication information indicating whether each preamble in a 2-step random access procedure falls back to a 4-step random access procedure;
cell signal quality measured before the 2-step random access procedure;
identification information comprising whether continuous LBT failures occurs in the LBT procedure before each random access procedure; or
the number of LBT failures in multiple random access preambles in the random access procedure for the target cell.

11. The radio communication method according to claim 1, wherein when the target instruction is used to indicate the UE to perform a Primary Secondary cell (PSCell) change or add a new PSCell, the radio communication method further comprises:
in the case that an LBT failure occurs in the random access procedure for a target PSCell, recording the LBT failure information in at least one of a Secondary Cell Group (SCG) failure information message or a Successful PSCell Change Report (SPR) in accordance with a PSCell change result or a PSCell addition result.

12. The radio communication method according to claim 11, wherein when the PSCell change result indicates a PSCell change failure or the PSCell addition result indicates that a PSCell addition failure, the recording the LBT failure information in at least one of the SCG failure information message or the successful PSCell change report comprises:
recording the LBT failure information in the SCG failure information message, the LBT failure information comprises LBT failure indication information, and the LBT failure indication information is used to indicate a PSCell change failure or a PSCell addition failure caused by the LBT failure.

13. The radio communication method according to claim 11, wherein when the PSCell change result indicates a PSCell change failure or the PSCell addition result indicates a PSCell addition failure, the recording the LBT failure information in at least one of the SCG failure information message or the successful PSCell change report comprises:
recording the LBT failure information in random access information of the SCG failure information message, and the LBT failure information comprises at least one of identification information indicating whether continuous LBT failures occur in the LBT procedure before each random access preamble, or the number of LBT failures in multiple random access preambles in the random access procedure for the target cell.

14. The radio communication method according to claim 11, wherein when the PSCell change result indicates a successful PSCell change and a successful PSCell change report is generated, or the PSCell addition result indicates a successful PSCell addition and a successful PSCell addition report is generated, the recording the LBT failure information in at least one of the SCG failure information message or the successful PSCell change report comprises:
recording the LBT failure information in the random access information in the successful PSCell change report, and the LBT failure information comprises at least one of identification information indicating whether continuous LBT failures occur in the LBT procedure before each random access preamble, or the number of LBT failures in multiple random access preambles in the random access procedure for the target cell.

15. The radio communication method according to any one of claims 10, 13 and 14, wherein the number of LBT failures in multiple random access preambles comprises at least one of the number of LBT failures on each beam, or the total number of LBT failures on all beams.

16. A User Equipment (UE), comprising:
an LBT module configured to determine that a Listen Before Talk (LBT) process is to be performed in accordance with a received target instruction wherein the target instruction is used to indicate the UE to handover from a source cell to a first target cell in a spectrum-sharing network; and
a report recording module configured to, when an LBT failure occurs in an access procedure to the first target cell, record LBT failure information in at least one of a Radio Link Failure (RLF) report, a random access report, or a Successful Handover Report (SHR) in accordance with a handover result.

17. A User Equipment (UE), comprising a memory, a transceiver and a processor, wherein the memory is configured to store therein a computer program, and the transceiver is configured to transmit and receive data under the control of the processor,
wherein the processor is configured to read the computer program in the memory, so as to perform the following operations:
determining that a Listen Before Talk (LBT) is to be performed in accordance with a received target instruction, wherein the target instruction is used to indicate the UE to handover from a source cell to a first target cell in a spectrum-sharing network; and
when an LBT failure occurs in an access procedure to the first target cell, recording LBT failure information in at least one of a Radio Link Failure (RLF) report, a random access report, or a Successful Handover Report (SHR) in accordance with a handover result.

18. An electronic device, comprising a memory, a processor, and a computer program stored in the memory and executed by the processor, wherein the processor is configured to execute the computer program so as to implement the radio communication method according to any one of claims 1 to 15.

19. A computer-readable storage medium storing therein a computer instruction, wherein the computer instruction is executed by a computer so as to implement the radio communication method according to any one of claims 1 to 15.
